(19) Europäisches Patentamt
European Patent Office
Office européen des brevets

(11) **EP 2 636 988 A1**

(12) **EUROPEAN PATENT APPLICATION**

(43) Date of publication:
**11.09.2013 Bulletin 2013/37**

(51) Int Cl.:
***G01B 9/02*** *(2006.01)*   ***G01B 11/24*** *(2006.01)*

(21) Application number: **13154752.3**

(22) Date of filing: **11.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.03.2012 JP 2012053684**

(71) Applicant: **Canon Kabushiki Kaisha Tokyo 146-8501 (JP)**

(72) Inventor: **Nakajima, Masaki Tokyo 146-8501 (JP)**

(74) Representative: **TBK Bavariaring 4-6 80336 München (DE)**

(54) **Surface shape measurement method and measurement apparatus using wavelength scanning interferometry**

(57)   A method of measuring a surface shape of a target object by irradiating a target object (5) and a reference surface (4a) with coherent light while changing a frequency of the coherent light includes: setting a rate of changing the frequency of the coherent light based on at least one of first information of a contour of an image of the target object projected onto a surface perpendicular to an optical axis of a measurement light and known second information of the surface shape; obtaining, by an image sensor, a plurality of images of interference fringes while changing the frequency of the coherent light with which the target object and the reference surface are irradiated at the set rate; and obtaining the surface shape based on the obtained plurality of images.

# F I G.  2

INPUT KNOWN INFORMATION (SECOND INFORMATION) OF SURFACE SHAPE OF TARGET OBJECT — **S101**

SET FREQUENCY CHANGE RATE OF WAVELENGTH-VARIABLE LASER BASED ON SECOND INFORMATION INPUT IN STEP S101 — **S102**

OBTAIN IMAGE OF INTERFERENCE FRINGE WHILE CHANGING FREQUENCY OF WAVELENGTH-VARIABLE LASER AT FREQUENCY CHANGE RATE SET IN STEP S102 — **S103**

OBTAIN SURFACE SHAPE OF TARGET OBJECT — **S104**

EP 2 636 988 A1

**Description**

BACKGROUND OF THE INVENTION

Field of the Invention

The present invention relates to a surface shape measurement method and measurement apparatus.

Description of the Related Art

In order to simultaneously measure information of surface shapes (heights) over the entire surface of a target object from image information of the target object, a method using a wavelength scanning interferometry is available. However, it is difficult for this wavelength scanning interferometry to quickly measure the surface shapes since a large number of images have to be obtained using an image sensor required to obtain an interference signal.

With a method described in APPLIED OPTICS, Vol. 33, No. 34, a target object is irradiated with coherent light while scanning a wavelength (or frequency), and a large number of images of interference light between light reflected by the target object and that reflected by a reference surface are sensed at a plurality of times using an image sensor. With the method described in APPLIED OPTICS, Vol. 33, No. 34, pieces of information of surface shapes (heights) of the target object are simultaneously measured from interference signals obtained for respective pixels of the image sensor. It is difficult for the method described in APPLIED OPTICS, Vol. 33, No. 34 to quickly measure the surface shapes of the target object since a large number of images (for example, one hundred and several ten images) have to be obtained by the image sensor.

SUMMARY OF THE INVENTION

The present invention provides a novel setting method of a frequency change rate of light used in the wavelength scanning interferometry, which method contributes to, for example, quick measurements of the surface shapes.

The present invention in the first aspect provides a measurement method as specified in claims 1 to 9.

The present invention in the second aspect provides a measurement apparatus as specified in claim 10.

Further features of the present invention will become apparent from the following description of exemplary embodiments with reference to the attached drawings.

BRIEF DESCRIPTION OF THE DRAWINGS

Fig. 1 is a diagram showing a measurement apparatus according to the first embodiment;

Fig. 2 is a flowchart of a measurement method according to the first and second embodiments;

Fig. 3 is a view showing approximate value data of Z dimensions of a target object;

Fig. 4 is a diagram showing a measurement apparatus according to the second embodiment;

Fig. 5 is a graph showing a frequency scan timing according to the second embodiment;

Fig. 6 is a diagram showing a measurement apparatus according to the third embodiment;

Fig. 7 is a flowchart of a measurement method according to the third embodiment;

Fig. 8 is a view showing a case in which a readout pixel region is not limited;

Fig. 9 is a view showing a case in which a readout pixel region is limited;

Fig. 10 is a view for explaining binning; and

Fig. 11 is a view showing projected sizes on an X-Y plane.

DESCRIPTION OF THE EMBODIMENTS

[First Embodiment]

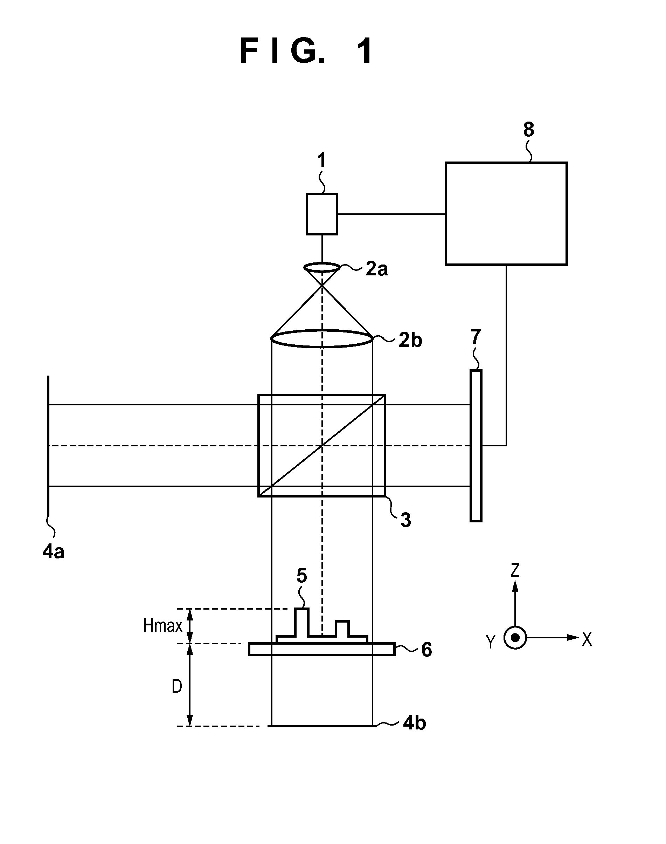

Fig. 1 shows the arrangement of an apparatus (measurement apparatus) according to the first embodiment, which quickly measures surface shapes of a target object from known information (second information) of the surface shapes of the target object using a wavelength scanning interferometry. The measurement apparatus includes, as a light source, a wavelength-variable laser 1 which emits coherent light while changing its frequency (and wavelength). A processor 8 changes the frequency of the coherent light emitted from the wavelength-variable laser 1 within a certain time range. A light beam emitted from the wavelength-variable laser 1 is magnified by a magnifying lens 2a, is then collimated into parallel light by a collimator lens 2b, and is divided by a beam splitter 3 into light traveling toward a reference surface 4a and that traveling toward a target object 5.

The light with which the reference surface 4a is irradiated is reflected by the reference surface 4a, and returns to the beam splitter 3 as reference light. On the other hand, the target object 5, which is placed on a stage 6 arranged at a position separated by a distance D from a position 4b conjugate with the reference surface 4a, is irradiated with the light traveling toward the target object 5. The light with which the target object 5 is irradiated is reflected by the target object 5, returns to the beam splitter 3 as measurement light, and interferes with the reference light reflected by the reference surface 4a, thus forming interference fringes on an image sensor 7. The processor 8 obtains a plurality of images as the interference fringes by the image sensor 7 while changing (scanning) the frequency of the wavelength-variable laser 1. The processor 8 applies frequency analysis to the interference fringes at respective pixels from the plurality of sensed images, thus measuring surface shapes (Z dimensions) at respective points on the surface of the target object 5 projected in an optical axis direction.

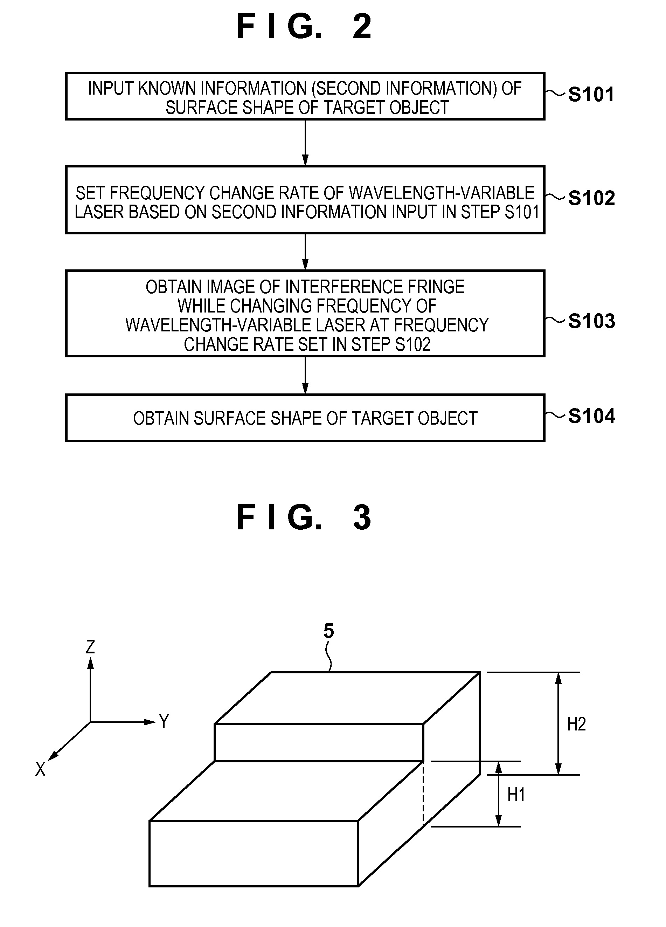

A method of measuring the surface shapes according to the first embodiment will be described below with reference to Fig. 2. In step S101, the processor 8 obtains known information (second information) of the surface shapes of the target object 5. The second information is obtained by inputting, for example, the known information of the surface shapes to the processor 8. The second information includes approximate value data of the Z dimensions at respective positions on the surface of the target object 5, that is, data which indicate distributions of Z dimensions H1 and H2 from a surface that contacts the stage 6, as shown in Fig. 3. Design information of the target object 5 and information indicating measurement results of the target object 5 using a prototype correspond to the second information.

When the design information is used as the second information, it is directly input from an input device such as a keyboard to the processor 8. When the measurement results using the prototype are used as the second information, the target object 5 is actually measured using the prototype, and the measurement results are registered in a database of the processor 8. Alternatively, CAD data as pieces of design information of various target objects 5 or measurement results of surface shapes of various target objects 5 are registered in advance, and the second information may be input by designating one of the registered target objects 5.

In step S102, the processor 8 sets a frequency change rate for respective sensing operations of the wavelength-variable laser 1 based on the second information input in step S101 (setting step). In the wavelength scanning interferometry, a maximum frequency $v_{max}$ of interference signals at respective points of the target object 5 is expressed using a maximum value $OPD_{max}$ of optical path length differences between the reference light and measurement light and a change rate $\Delta f$ of the frequency by:

$$v_{max} = (4 \cdot \pi \cdot \Delta f \cdot OPD_{max})/C \quad \ldots (1)$$

where C is a light speed.

From the sampling theorem, a condition that allows the quickest sensing operation is a case which satisfies:

$$v_{max} = FR/2 \quad \ldots (2)$$

where FR is a frame rate of the image sensor 7.

For every target objects 5, the maximum frequency $v_{max}$ of interference signals need only match a Nyquist frequency as a frequency 1/2 of the frame rate FR of the image sensor 7. However, the maximum value $OPD_{max}$ of the optical path length differences varies depending on target objects 5. Therefore, when the change rate $\Delta f$ of the frequency is constant, the maximum frequency $v_{max}$ does not always match the Nyquist frequency FR/2 with respect to the frame rate FR of the image sensor 7.

Hence, in step S102, the processor 8 sets the maximum value $OPD_{max}$ of the optical path length differences between the reference light and measurement light based on the second information of the known surface shapes of the target object 5 input in step S101, and sets the change rate $\Delta f$ of the frequency based on the set value $OPD_{max}$. In the first embodiment, the mounting surface of the target object 5 with respect to the stage 6 is set at a place separated by the distance D from the position 4b conjugate with the reference surface 4a. For this reason, letting H be approximate value data of the Z dimensions of the target object 5, the maximum value $OPD_{max}$ of the optical path length difference is expressed by:

$$OPD_{max} = MAX(H) + D \quad \ldots (3)$$

where MAX is a function required to obtain a maximum value of the approximate value data H of the Z dimensions of the target object 5.

Hence, by substituting equation (1) which expresses the maximum frequency $v_{max}$ of the interference signal into conditional formula (2) that allows the quickest sensing operation, and arranging that equation for $\Delta f$, we have:

$$\Delta f \leq (FR \cdot C)/(8 \cdot \pi \cdot OPD_{max}) \quad \ldots (4)$$

The processor 8 sets the change rate $\Delta f$ of the frequency of the wavelength-variable laser 1 so as to meet inequality (4) above.

In this case, a maximum rate $\Delta f$ upon letting $H_{max}$ be a maximum value of the approximate value data of the Z dimensions of the target object 5 is given by:

$$\Delta f = (\alpha \cdot FR \cdot C)/\{8 \cdot \pi \cdot (H_{max} + D)\} \quad \ldots (5)$$

where $\alpha$ is an offset. In actual measurement, in order to prevent aliasing caused by noise due to manufacturing errors of the target object 5 and noise at the time of measurement, the interference signal frequency is desirably set to be a value about 10% lower than the Nyquist frequency. For this reason, the value $\alpha$ is set to be about 0.9.

In step S103, the processor 8 obtains an image required to measure the Z dimensions using the image sensor 7 while changing the wavelength of the wavelength-variable laser 1 based on the change rate $\Delta f$ of the frequency of the wavelength-variable laser 1 set in step S102 (obtaining step). Letting $\Delta F$ be a scan width of the frequency of the wavelength-variable laser 1, a measurement time t upon measuring the target object 5 at the change rate $\Delta f$ of the frequency given by equation (5) is expressed by:

$$t = \Delta F/\Delta f = \{8 \cdot \pi \cdot (H_{max} + D) \cdot \Delta F\}/(\alpha \cdot FR \cdot C) \quad \ldots (6)$$

As can be seen from equation (6), the measurement time t changes when the Z dimension ($H_{max}$) of the target object 5 changes. A quicker measurement can be done with decreasing Z dimension of the target object. Letting $\Delta f$ be the frequency change rate set according to the Z dimensions of the target object 5, the measurement time can be shortened compared to the rate $\Delta f$ which is fixed independently of the Z dimensions of the target object 5. For example, assume that the Z dimensions of the target object having a maximum value = 10 mm of the approximate values of the Z dimensions are measured under the conditions that the distance D from the position 4b conjugate with the reference surface 4a is 10 mm and a measurable range of the Z dimensions is 50 mm, and $\alpha$ = 0.9. In this case, when the change rate $\Delta f$ of the frequency is set according to the Z dimensions of the target object, the measurement time can be shortened to about 1/3 compared to the fixed rate $\Delta f$.

In step S104, the processor 8 executes frequency analysis by applying processing such as Fourier transformation to respective pixels of the image sensor 7 based on the plurality of pieces of image information obtained in step S103, and sets an obtained frequency $v_{m,n}$ of the interference signal (where m is the number of a row direction of the image sensor, and n is the number of a column direction of the image sensor).

In this embodiment, a total of the Z dimensions of the target object 5 and the distance D from the position 4b conjugate with the reference surface 4a corresponds to the optical path length difference. Hence, the processor 8 obtains a Z dimension $H_{m,n}$ of the target object 5 from the set frequency $v_{m,n}$ of the interference signal using:

$$H_{m,n} = \{(v_{m,n} \cdot C)/(4 \cdot \pi \cdot \Delta f)\} - D \quad \ldots (7)$$

Step S104 is the step of obtaining the surface shapes of the target object 5. The measurement apparatus of the first embodiment can quickly and simultaneously measure the Z dimensions at respective points of the target object 5 by executing measurements while changing the frequency of the wavelength-variable laser 1 at the change rate $\Delta f$ of the frequency set according to the Z dimensions of the target object 5. When Z dimensions of target objects 5 of the same type are to be continuously measured, step S101 need not be executed for the second or subsequent target object 5, and only steps S102 to S104 need only be executed.

[Second Embodiment]

A measurement apparatus according to the second embodiment executes a wavelength scanning interferometry by setting a wavelength of a light source to be multi-wavelengths. As a result, if the measurement precision remains the same, the second embodiment can reduce a scan width ΔF of a frequency of the light source compared to the measurement method of the first embodiment. As can be seen from equation (6), the measurement time can be further shortened compared to the first embodiment.

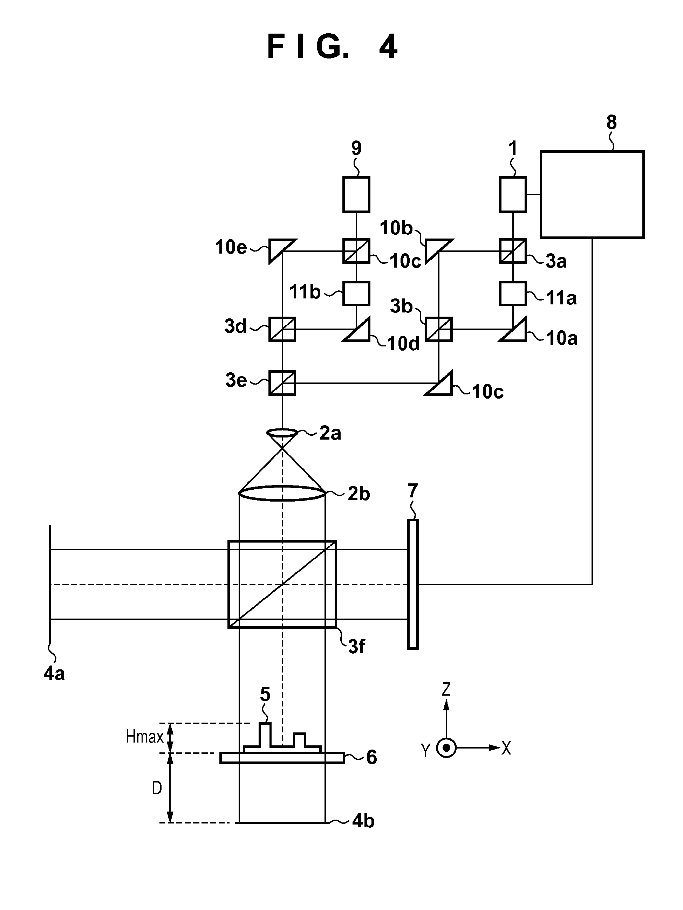

Fig. 4 is a schematic diagram showing the arrangement of a three-dimensional measurement apparatus of a target object 5 according to the second embodiment. The measurement apparatus uses a wavelength-variable laser 1, which emits coherent light while changing a frequency, as one light source. A processor 8 changes a frequency (wavelength) of a light beam emitted by the wavelength-variable laser 1 within a certain time range. Light having a frequency $f_1$ emitted by the wavelength-variable laser 1 is divided by a beam splitter 3a. One of divided light beams is incident on a frequency shifter 11a which shifts a frequency by an arbitrary amount, and is converted into light, the frequency of which is shifted by an arbitrary frequency shift amount $df_1$.

The traveling direction of the frequency-shifted light is deflected by a reflective mirror 10a, and that light is divided by the beam splitter 3a to be combined with light, the traveling direction of which is deflected by a reflective mirror 10b, by a beam splitter 3b. This combined light beam will be referred to as a light beam 1 hereinafter. The frequency shift amount df1 corresponds to a frequency of a beat signal of the light beam 1, and is required to be 1/2 FR or less of an image sensor 7 so as to correctly obtain an interference signal.

The measurement apparatus uses a wavelength-fixed laser 9 which emits coherent light, the frequency of which is fixed, as the other light source. Light having a frequency $f_2$ emitted by the wavelength-fixed laser 9 is divided by a beam splitter 10c in the same manner as the wavelength-variable laser 1. One of the divided light beams is converted by a frequency shifter 11b into light, the frequency of which is shifted by an arbitrary frequency $df_2$, and its traveling direction is deflected by a reflective mirror 10d.

The traveling direction of the other light beam divided by the beam splitter 10c is deflected by a reflective mirror 10e while the frequency emitted by the wavelength-fixed laser 9 remains unchanged. The light, the frequency of which is shifted by the frequency df2 and that, the frequency of which remains unchanged from that emitted by the wavelength-fixed laser 9, are combined by a beam splitter 3d. This light beam will be referred to as a light beam 2 hereinafter. The frequency shift amount $df_2$ corresponds to a frequency of a beat signal of the light beam 2, and is required to be 1/2 FR or less of the image sensor 7 so as to correctly obtain an interference signal.

The light beam 2 and the light beam 1, the traveling direction of which is deflected by a reflective mirror 4c, are combined by a beam splitter 3e, the combined light beam is magnified by a magnifying lens 2a, and the magnified light beam is collimated into a parallel light beam by a collimator lens 2b. The parallel light beam is divided by a beam splitter 3f into a light beam traveling toward a reference surface 4a and that traveling toward the target object 5 placed on a stage 6.

The light incident on the reference surface 4a is reflected by the reference surface 4a, and returns to the beam splitter 3f as reference light. On the other hand, the target object 5, which is placed on the stage 6 arranged at a place separated by a distance D from a position 4b conjugate with the reference surface 4a, is irradiated with the light beam traveling toward the target object 5. The light beam, with which the target object 5 is irradiated is reflected by the target object 5, and returns to the beam splitter 3f as measurement light. The measurement light interferes with the reference light reflected by the reference surface 4a, and forms interference fringes on the image sensor 7. At this time, on the image sensor 7, interference fringes are formed by superposing a beat interference signal 1 by the light beam 1 generated by combining the light of the frequency $f_1$ and that of the frequency $(f_1 + df_1)$, and a beat interference signal 2 generated by combining the light of the frequency $f_2$ and that of the frequency $(f_2 + df_2)$.

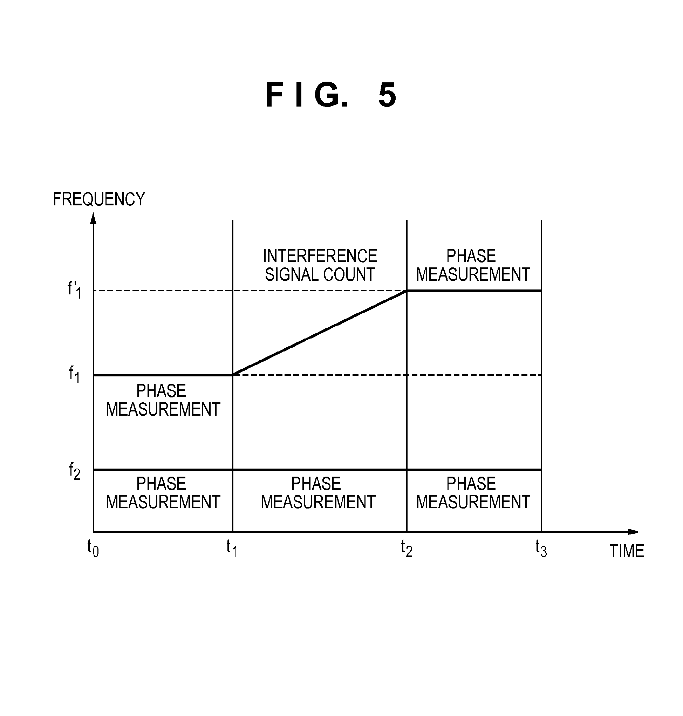

The measurement apparatus senses the interference fringes from time to shown in Fig. 5 in this state. The measurement apparatus senses a plurality of images of interference fringes using the image sensor 7 while changing the frequency of the wavelength-variable laser 1 from $f_1$ to $f_1$, during a period from time $t_1$ to time $t_2$. The measurement apparatus senses a plurality of images of interference fringes using the image sensor 7 while maintaining the frequency of the wavelength-variable laser 1 at $f_1$, during a period from time $t_2$ to time $t_3$.

The processor 8 obtains the beat interference signal 1 from the plurality of images sensed during a period from time to to $t_1$. The processor 8 makes calculations such as a 4-bucket method, 13-bucket method, or discrete Fourier transformation for the beat interference signal 1 to calculate phases $\varphi_{1m,n}$ of respective pixels of the beat interference signal 1 of the frequency $f_1$ (where m is the number of a row direction of pixels of the image sensor, and n is the number of a column direction). Next, the processor 8 obtains the number of changes in beat interference signal during a frequency scan by a method of, for example, counting the numbers of bright points and dark points of interference fringes on respective pixels from the plurality of images sensed during the period from time $t_1$ to time $t_2$, and sets interference orders $M_{1m,n}$.

Next, the processor 8 obtains beat interference signals 1' of respective pixels from the plurality of images sensed during the period from time t2 to time t3, and makes calculations such as discrete Fourier transformation to

calculate phases $\varphi_{1'm,n}$ of the beat interference signals 1' having the frequency $f_{1'}$. Then, the processor 8 calculates Z dimensions $H_{1m,n}$ using a synthetic wavelength $\Lambda_{11'}$ from the phases $\varphi_{1m,n}$ and $\varphi_{1'm,n}$ and the interference orders $M_{1m,n}$ calculated at respective timings using:

$$H_{1m,n} = (\Lambda_{11'}/2)\{M_{1m,n} + (\varphi_{1'm,n} - \varphi_{1m,n})/2\pi\}$$

$$...(8)$$

where $\Lambda_{11'}$ is a combined frequency of the light frequencies $f_1$ and $f_{1'}$, and is expressed by:

$$\Lambda_{11'} = C/|f_1 - f_{1'}| \quad ...(9)$$

where C is a light speed.

Next, the processor 8 obtains the beat interference signal 2 from the plurality of images based on the wavelength-fixed laser 9, which are sensed during the period from time to to time $t_3$. The processor 8 makes calculations such as a 4-bucket method, 13-bucket method, or discrete Fourier transformation to the beat interference signal 2 to calculate phases $\varphi_{2m,n}$ on respective pixels of the beat interference signal 2 of the frequency $f_2$. The processor 8 calculates Z dimensions $H_{2m,n}$ from a synthetic wavelength $\Lambda_{1'2}$ from the obtained phases $\varphi_{2m,n}$ and the previously calculated phases $\varphi_{1'm,n}$ using:

$$H_{2m,n} = (\Lambda_{1'2}/2)\{M_{2m,n} + (\varphi_{1'm,n} - \varphi_{2m,n})/2\pi\}$$

$$...(10)$$

where $\Lambda_{1'2}$ is a synthetic wavelength of the light frequencies $f_1$, and $f_2$, and is expressed by:

$$\Lambda_{1'2} = C/|f_{1'} - f_2| \quad ...(11)$$

$M_{2m,n}$ are interference orders when the synthetic wavelength $\Lambda_{1'2}$ is used, and can be calculated by:

$$M_{2m,n} = \text{round}\{(2H_{1m,n}/\Lambda_{11'}) - (\varphi_{1'm,n} - \varphi_{2m,n})/2\pi\}$$

$$...(12)$$

In the example of Fig. 5, since $|f_1 - f_{1'}| < |f_{1'} - f_2|$, the synthetic wavelength $\Lambda_{1'2}$ is shorter than the synthetic wavelength $\Lambda_{11'}$. Therefore, the Z dimensions $H_{2m,n}$ calculated using equation (10) have higher precision than the Z dimensions $H_{1m,n}$ calculated using equation (8).

Also, the processor 8 calculates Z dimensions $H_{3m,n}$ using a wavelength $(C/f_2)$ of the wavelength-fixed laser 9 from the light frequency $f_2$ of the wavelength-fixed laser 9 and the interference orders $M_{2m,n}$ calculated using equation (10) using:

$$H_{3m,n} = (C/2f_2)\{M_{3m,n} + (\varphi_{2m,n}/2\pi)\} \quad ...(13)$$

where $M_{3m,n}$ are interference orders, and can be calculated by:

$$M_{3m,n} = \text{round}\{(2H_{2m,n}C/f_2) - (\varphi_{2m,n}/2\pi)\} \qquad \ldots(14)$$

In this embodiment, the wavelength ($C/f_2$) of the wavelength-fixed laser 9 is shorter than the synthetic wavelength $\Lambda_{12'}$. Therefore, the Z dimensions $H_{3m,n}$ calculated using equation (13) have higher precision than the Z dimensions $H_{2m,n}$. The processor 8 measures Z dimensions at respective points on the surface of the target object 5 by the aforementioned method. The sequence of the measurement method according to the second embodiment will be described below with reference to Fig. 2.

Steps S101 to S103 are the same as those in the first embodiment. In step S104, the processor 8 obtains the interference orders from the number of changes in beat interference signal during a frequency scan at respective pixels of the image sensor 7 from a plurality of pieces of image information obtained in step S103, concatenates phases using the synthetic wavelength, and analyzes the Z dimensions of the target object 5.

The measurement apparatus of the second embodiment performs measurements while changing the frequency of the wavelength-variable laser 1 at a change rate $\Delta f$ of a frequency set according to the Z dimensions of the target object 5, thereby quickly and simultaneously measuring Z dimensions at respective points of the target object 5. When Z dimensions of target objects 5 of the same type are to be continuously measured, step S101 need not be executed for the second or subsequent target object 5, and only steps S102 to S104 need only be executed.

[Third Embodiment]

In the third embodiment, a light source which generates incoherent light is added, and a measurement apparatus sets approximate value data of Z dimensions of a target object 5, a position, orientation, and the like of the target object 5 from images based on the incoherent light. The measurement apparatus of the third embodiment changes a frame rate of an image sensor 7 from these set data, measures the Z dimensions of the target object 5 more quickly, and also measures dimensions of a two-dimensional shape projected from the image based on the incoherent light onto an X-Y plane.

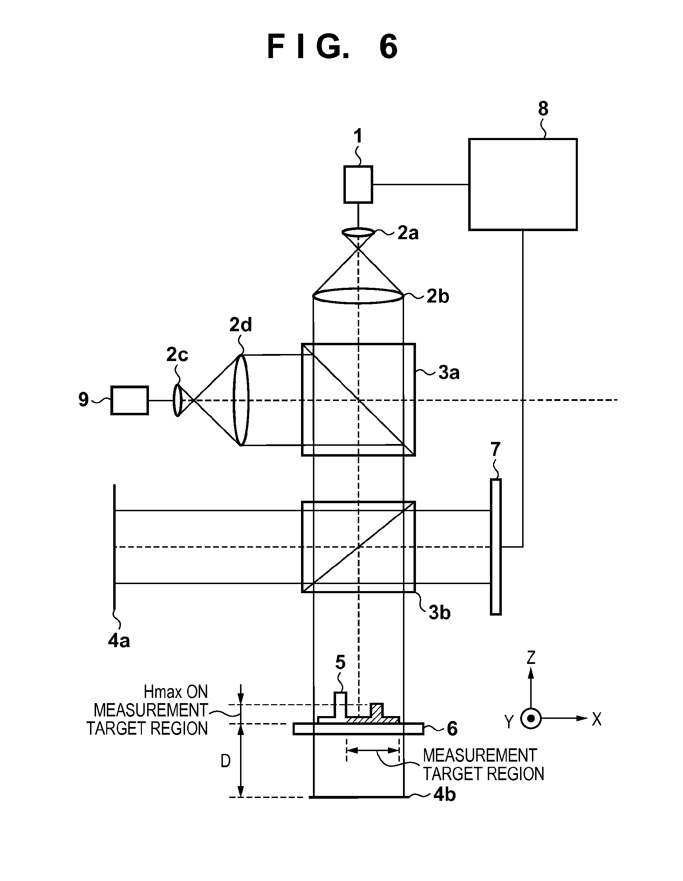

Fig. 6 shows the arrangement of a three-dimensional measurement apparatus of the third embodiment. The measurement apparatus further includes a light source 9, which generates incoherent light, as a light source. A light beam emitted by the light source 9 is magnified by a magnifying lens 2c, and is collimated into parallel light by a collimator lens 2d. The traveling direction of the incoherent light collimated into the parallel light is deflected by a beam splitter 3a, that light passes through a beam splitter 3b, and strikes on the target object 5. The incoherent light with which the target object 5 is irradiated is reflected by the target object 5, its traveling direction is deflected by the beam splitter 3b, and that light is incident on the image sensor 7. The image sensor 7 senses an image of the target object 5 formed by the incoherent light, and the processor 8 executes processing such as edge detection based on strengths of light of the obtained image to measure projected dimensions on the X-Y plane of the target object 5. The same as in the first embodiment applies to the measurements of Z dimensions.

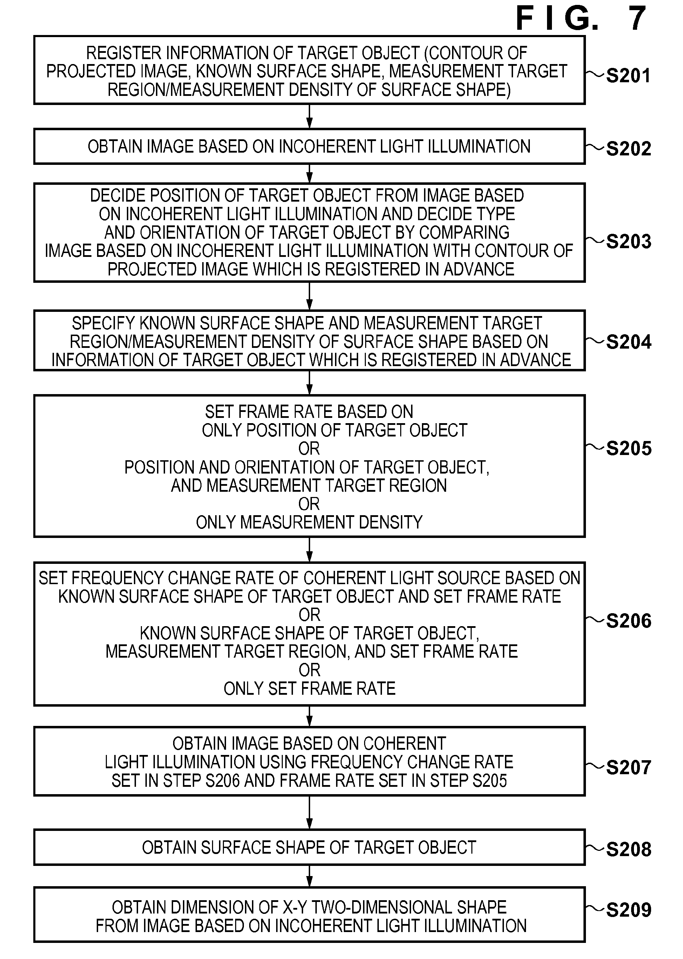

Fig. 7 shows the sequence of the measurement method according to the third embodiment. In step S201, pieces of information respectively for a plurality of target objects are registered in the processor 8 (registering step). Pieces of information of each target object registered in the processor 8 are as follows.

•Information of contours of images of the target objects projected onto a surface (X-Y plane) perpendicular to the optical axis of measurement light (first information). This information is used to set a type of the target object 5 in step S203.

•Known information of surface shapes (second information). This information is used to set a frequency change rate of a wavelength-variable laser 1 in step S206.

•Information indicating a measurement target region of surface shapes. This information is used to set imaging conditions of the image sensor 7 in step S205.

•Information of a measurement density indicating the number of points used to measure Z dimensions per unit area at measurement positions of surface shapes. This information is used to set imaging conditions of the image sensor 7 in step S205.

•Information indicating measurement positions of dimensions of a two-dimensional shape on an X-Y plane. This information is used to set measurement position upon measuring dimensions of the two-dimensional shape in step S209.

The pieces of information of the target objects registered in step S201 include those pieces of information. In step S202, the processor 8 obtains an image using incoherent light. More specifically, the processor 8 obtains the image by irradiating the target object 5 with incoherent light emitted by the light source 9, and sensing reflected light by the image sensor 7.

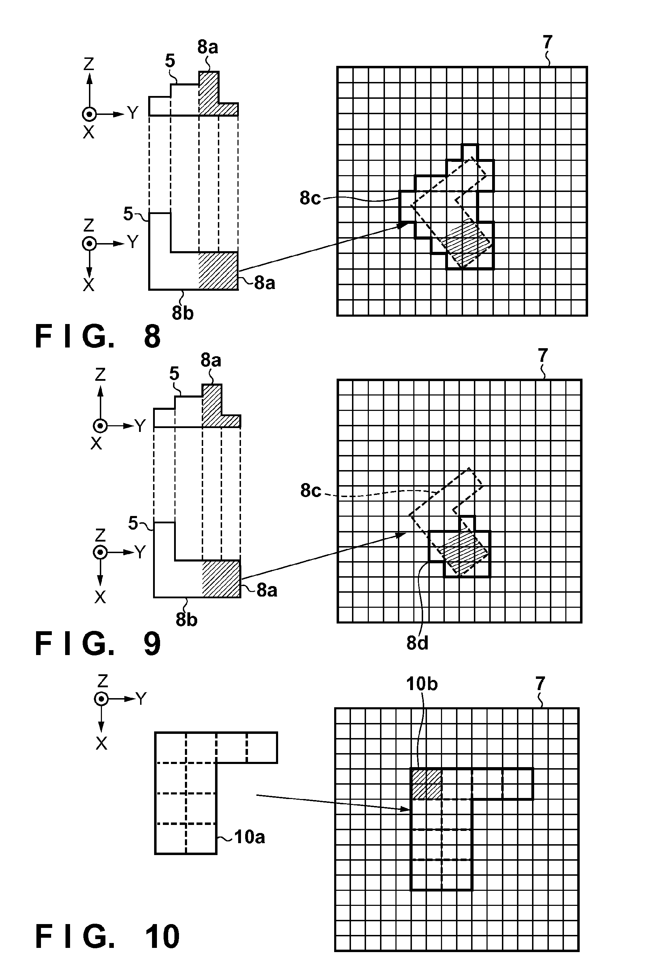

In step S203, the processor 8 specifies the type of the target object 5 and the position and orientation on the image sensor 7 by comparing the image obtained in step S202 with the information of the contours of projected images of the plurality of target objects registered in step S201 (first information) (comparing step). The processor 8 applies image processing such as edge detection to the image obtained in step S202 to calculate the position of the target object 5 on the image sensor 7 and a contour of the projected shape. The processor 8 sets the type and orientation of the target object 5 by comparing the calculated contour of the projected shape with the information of the contours of the projected images registered in the processor 8 in step S201. The processor 8 checks a correlation between two contours while moving and rotating information of the contour of the projected image of the target object 5 registered in advance, as denoted by reference numeral 8b in Fig. 8, on the frame of the image sensor 7 with respect to the data of the image obtained in step S202. The processor 8 sets the type, position, and orientation of the target object 5 by calculating a two-dimensional projected shape, position, and orientation of the target object 5 in a state in which the contour of the projected image 8b overlaps a broken line portion shown in Fig. 8, that is, to have the highest correlation.

In step S204, the processor 8 sets known information of Z dimensions of the target object 5, a Z-dimension measurement target region, and a Z-dimension measurement density based on the information registered in step S201. In step S205, the processor 8 sets at least one of a readout pixel region and binning as imaging conditions of the image sensor 7 from the position and orientation of the target object 5 on the image sensor 7 set in step S203 and the Z-dimension measurement target region and measurement density set in step S204. Then, the processor 8 sets and changes a frame rate upon setting the readout pixel region or binning.

To set the readout pixel region is to set pixels from which data are to be read out on the image sensor 7, that is, a Z-dimension measurement target region when a CMOS sensor is mainly used as the image sensor 7. The processor 8 recognizes pixels of the image sensor 7, on which the entire target object 5 is located, from the position of the target object 5 on the image sensor 7 set in step S204, that is, those of a minimum region including the entire target object 5 indicated by a bold solid line 8c in Fig. 8. When a Z-dimension measurement target region is not registered, the processor 8 sets the readout pixel region as the region 8c, and sets the imaging conditions of the image sensor 7 so as not to read out data of pixels other than those bounded by the bold solid line. In this manner, the number of data to be read out is reduced, thus improving the frame rate.

When the Z-dimension measurement target region is registered, the processor 8 recognizes pixels of the image sensor 7 on which the Z-dimension measurement target region (hatched portion 8a) is located from those of a minimum region including the entire target object 5, the orientation of the target object 5, and the Z-dimension measurement positions. Note that the orientation of the target object 5 is obtained in step S203, and the Z-dimension measurement target region is obtained in step S204. The processor 8 sets pixels of a region (8d in Fig. 9) bounded by a bold sold line as a minimum region including the Z-dimension measurement positions as those from which data are to be read out, and sets the imaging conditions of the image sensor 7 so as not to read out data of pixels other than the measurement target region 8d. Thus, the number of data to be read out is further reduced, thus improving the frame rate. On a general CMOS sensor, although depending on a size of a limited region, a frame rate higher by several to several ten times than a case in which data of all pixels are read out can be obtained.

"Binning" is a method of reading out data of pixels around a certain pixel together by adding them, and reducing the number of data to be read out when a CCD sensor is mainly used as the image sensor 7. Assume that a region as a unit of a Z-dimension measurement range of the target object 5 corresponds to four pixels of the image sensor 7, as shown in Fig. 10. In this case, the processor 8 sets the imaging conditions of the image sensor 7 so as to add data of four pixels (hatched portion 10b) corresponding to the unit region of the Z-dimension measurement range of the target object 5 and to read out them simultaneously. Thus, the number of data to be read out is reduced, thus improving the frame rate.

As is known, by simultaneously reading out N x N pixels in a square region on a general CCD, a higher frame rate about N to $N^2$ times of a case in which data of all pixels are read out can be obtained. The processor 8 obtains a higher frame rate by setting and changing the number N of pixels to be read out together by binning based on a Z-dimension measurement density $\rho$ set in step S204 and a pixel scale S of the image sensor 7, so as to satisfy:

$$N = \text{round}\{(\rho/S^2)^{(1/2)}\} \quad \ldots (15)$$

where the Z-dimension measurement density $\rho$ is the number of measurement points per unit area of the target object 5, and round represents a function of rounding to a closest integer. The binning is effective when the Z-dimension measurement density is not so high compared to resolutions required for X and Y projected dimension measurements (for example, when only a flatness or step of the target object 5 is to be measured).

In step S206, the processor 8 sets a frequency change rate $\Delta f$ of the wavelength-variable laser 1 from a maximum value $OPD_{max}$ of optical path length differences of interference light between measurement light and reference light, and a frame rate FR' of the image sensor based on:

$$\Delta f \ \leq \ (FR' \cdot C) / (8 \cdot \pi \cdot OPD_{max}) \ \ \ldots (16)$$

The processor 8 sets the frequency change rate to satisfy the sampling theorem as in step S102 of the first embodiment. The maximum value $OPD_{max}$ of the optical path length differences is obtained from the known information of the Z dimensions and the Z-dimension measurement target region of the target object 5 set in step S204. The frame rate FR' is that when the measurement target region of the image sensor 7 or the binning set in step S205 is set. In this embodiment, a surface of a stage on which the target object 5 is placed is arranged at a place separated by a distance D from a position 4b conjugate with a reference surface 4a. For this reason, the maximum value $OPD_{max}$ of the optical path length differences can be expressed by {MAX (H) + D} using an approximate value H of the Z dimension of the target object 5 as in the first embodiment.

The frame rate FR' of the image sensor 7 is faster by about several to several ten times than a case in which neither the measurement target region nor the binning is set. For this reason, although depending on the value $OPD_{max}$, the frequency change rate $\Delta f$ can be similarly set to be larger by about several to several ten times than the case in which neither the measurement target region nor the binning is set. Even when a target object 5 having the same approximate value of the Z dimension, but a different shape, that is, a target object 5 whose $OPD_{max}$ value remains unchanged is to be measured, or when a change in $OPD_{max}$ is not considered, when the frame rate of the image sensor 7 is changed, $\Delta f$ is required to be changed in step S206.

In step S207, the processor 8 obtains Z-dimension measurement images using the image sensor 7 while changing the frequency of the wavelength-variable laser 1 based on the frame rate FR' of the image sensor changed in step S205 and the frequency change rate $\Delta f$ of the wavelength-variable laser 1 set in step S206.

In this embodiment, the frame rate FR is speeded up by setting the measurement target region of the image sensor 7 or the binning. For this reason, according to the third embodiment, the frequency change rate $\Delta f$ of the wavelength-variable laser can be set to be still larger by about several to several ten times than the settings in step S102 of the first and second embodiments. Hence, in the third embodiment, a measurement time can be shortened by about several to several ten times compared to the first and second embodiments.

In step S208, the processor 8 applies frequency analysis to respective pixels of the image sensor 7 from the plurality of images obtained in step S207, sets frequencies $v_{m,n}$ of obtained interference signals, and obtains Z dimensions $H_{m,n}$ of the target object 5 from the set frequencies $v_{m,n}$ (where m is the number of a row direction of the image sensor, and n is the number of a column direction of the image sensor). In step S208, the processor 8 executes processing such as Fourier transformation to attain frequency analysis as in step S104 of the first and second embodiments.

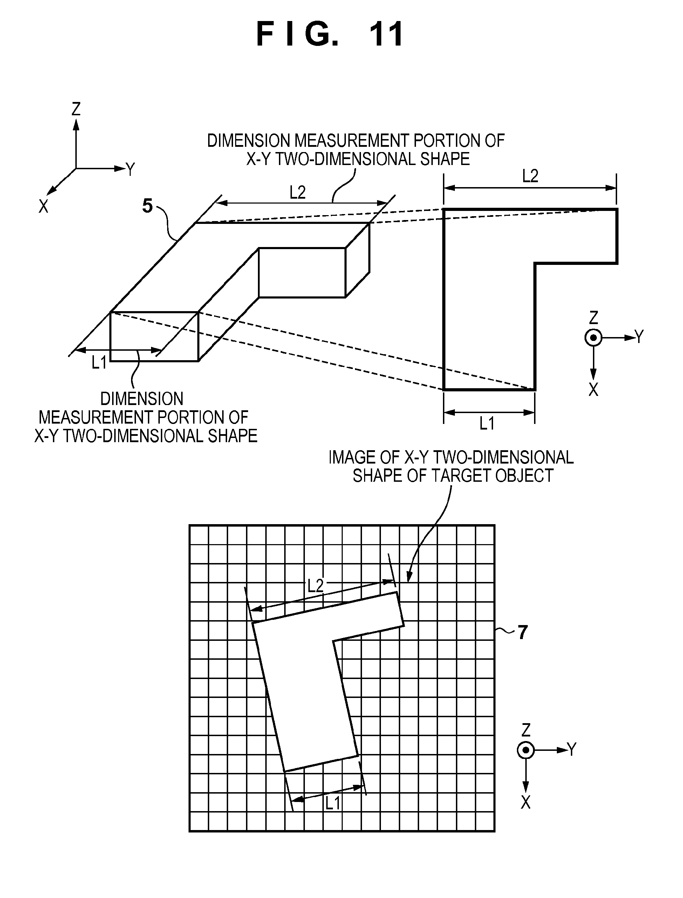

In step S209, the processor 8 analyzes the projected dimensions on the X-Y plane from the images obtained based on incoherent light illumination in step S202, the position and orientation of the target object 5 set in step S203, and the measurement positions of the projected dimensions on the X-Y plane. This method will be described with reference to Fig. 11. Reference numerals L1 and L2 in Fig. 11 denote measurement positions of projected dimensions on the X-Y plane of the target object 5. The processor 8 calculates the number of pixels between L1 and L2 from the position and orientation of the target object 5 on the image sensor 7 and the measurement positions of the projected dimensions on the X-Y plane. Next, the processor 8 analyzes the projected dimensions on the X-Y plane by, for example, a method of calculating L1 and L2 dimensions from the pixel scale S and the number of pixels between L1 and L2. The precision of the projected dimensions on the X-Y plane depends on the resolution of the image sensor 7, and is higher with increasing the number of pixels. Therefore, it is desirable to obtain images based on incoherent light using data of all the pixels of the image sensor 7 without setting the measurement target region or binning.

By executing steps S201 to S209, the Z dimensions at respective points on the target object 5 can be simultaneously and quickly measured, and the projected dimensions on the X-Y plane can also be measured from images obtained based on incoherent light. Also, in this embodiment, since the frame rate is speeded up by several to several ten times even by setting only the measurement target region or binning, the Z dimensions can be quickly measured. In this embodiment, when data of the target objects 5 are registered once in step S201 to perform measurements, the processing can be started from step S202 in the next and subsequent measurements. Also, the wavelength of the light source of this embodiment may be set to be multi-wavelength to measure the Z dimensions.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. A method of measuring a surface shape of a target object by irradiating a target object (5) and a reference surface (4a) with coherent light while changing a frequency of the coherent light includes: setting a rate of changing the frequency of the coherent light based on at least one of first information of a contour of an image of the target object projected onto a surface perpendicular to an optical axis of a measurement light and known second information of the surface shape; obtaining, by an image sensor, a plurality of images of interference fringes while changing the frequency of the coherent light with which the target object and the reference surface are irradiated at the set rate; and obtaining the surface shape based on the obtained plurality of images.

**Claims**

1. A method of measuring a surface shape of a target object by irradiating a target object (5) and a reference surface (4a) with coherent light while changing a frequency of the coherent light, and sensing interference fringes between measurement light reflected by the target object and reference light reflected by the reference surface, the method **characterized by** comprising:

   a setting step of setting a rate of changing the frequency of the coherent light based on at least one of first information of a contour of an image of the target object projected onto a surface and known second information of the surface shape;
   an obtaining step of obtaining, by an image sensor, a plurality of images of the interference fringes while changing the frequency of the coherent light with which the target object and the reference surface are irradiated at the rate set in the setting step; and
   a step of obtaining the surface shape of the target object based on the plurality of images obtained in the obtaining step.

2. The method according to claim 1, **characterized in that** the second information is design information of the surface shape or information indicating measurement results of the surface shape.

3. The method according to claim 1 or 2, **characterized in that** in the obtaining step of the plurality of images, the target object and the reference surface are irradiated with coherent light, a frequency of which is fixed, in addition to the coherent light, the frequency of which is changed.

4. The method according to any one of claims 1 to 3, **characterized in that** the setting step includes setting the rate based on a maximum value of optical path length differences between the reference light and measurement light obtained from the second information, and a frame rate of the image sensor.

5. The method according to any one of claims 1 to 4, **characterized by** further comprising:

   a registering step of registering the first information, the second information, and information of at least one of a measurement target region and a measurement density of the surface shape in a database for each of a plurality of measurement target objects, the measurement density indicating the number of measurement points per unit area;
   a step of obtaining, by the image sensor, an image of a two-dimensional shape of the target object by irradiating the target object with incoherent light; and
   a comparing step of specifying a target object from the plurality of measurement target objects by comparing the obtained image of the two-dimensional shape with the first information registered in the database,
   wherein the setting step includes:

      setting at least one of a readout pixel region on the image sensor required to obtain the surface shape and binning of pixels on the image sensor based on information registered in the database of the target object which is specified in the comparing step; and
      setting the rate by setting a frame rate of the image sensor based on at least one of the set readout pixel region and the number of pixels to be binned.

6. The method according to claim 5, **characterized in that** the registering step includes registering at least the first information, the second information, and the information of the measurement target region of the surface shape in the database for each of a plurality of measurement target objects,
   the comparing step includes specifying a target object from the plurality of measurement target objects by comparing the obtained image of the two-dimensional shape with the first information registered in the database, and obtaining a position of the specified target object on the image sensor, and
   the setting step includes setting the readout pixel region based on the position of the target object on the image sensor obtained in the comparing step and the information of the measurement target region, which is registered in the database of the target object specified in the comparing step, and setting the rate by setting the frame rate based on the set readout pixel region.

7. The method according to claim 5, **characterized in that** the registering step includes registering at least the first information, the second information, and information of the measurement density of the surface shape in the database for each of a plurality of measurement target objects, and
the setting step includes setting the number of pixels to be binned based on the information of the measurement density of the surface shape, which is registered in the database of the target object specified in the comparing step, and setting the rate by setting the frame rate based on the set number of pixels to be binned.

8. The method according to any one of claims 5 to 7, **characterized by** further comprising:

a step of obtaining a dimension of the two-dimensional shape of the target object based on the obtained image of the two-dimensional shape.

9. The method according to any one of claims 5 to 8, **characterized by** further comprising:

obtaining a plurality of images of the interference fringes at a frame rate larger than the obtaining step.

10. An apparatus for measuring a surface shape of a target object by irradiating a target object (5) and a reference surface (4a) with coherent light while changing a frequency of the coherent light, and sensing interference fringes between measurement light reflected by the target object and reference light reflected by the reference surface, the apparatus **characterized by** comprising:

a light source (1) configured to emit the light;
an image sensor (7) configured to sense interference fringes; and
a processor (8) configured to obtain the surface shape based on a plurality of images of the interference fringes sensed by said image sensor,
wherein said processor sets a rate of changing the frequency of the coherent light based on at least one of first information of a contour and a position of an image of the target object projected onto a surface perpendicular to an optical axis of the measurement light and known second information of the surface shape,
said processor controls the image sensor to obtain the plurality of images of the interference fringes while changing the frequency of the coherent light which with the target object and the reference surface are irradiated at the set rate, and
said processor obtains the surface shape of the target object based on the plurality of images obtained by said image sensor.

# F I G. 1

# F I G.   2

| | |
|---|---|
| INPUT KNOWN INFORMATION (SECOND INFORMATION) OF SURFACE SHAPE OF TARGET OBJECT | ~S101 |

↓

| | |
|---|---|
| SET FREQUENCY CHANGE RATE OF WAVELENGTH-VARIABLE LASER BASED ON SECOND INFORMATION INPUT IN STEP S101 | ~S102 |

↓

| | |
|---|---|
| OBTAIN IMAGE OF INTERFERENCE FRINGE WHILE CHANGING FREQUENCY OF WAVELENGTH-VARIABLE LASER AT FREQUENCY CHANGE RATE SET IN STEP S102 | ~S103 |

↓

| | |
|---|---|
| OBTAIN SURFACE SHAPE OF TARGET OBJECT | ~S104 |

# F I G.   3

# F I G.  4

# F I G.  5

# F I G.  6

# FIG. 7

REGISTER INFORMATION OF TARGET OBJECT (CONTOUR OF PROJECTED IMAGE, KNOWN SURFACE SHAPE, MEASUREMENT TARGET REGION/MEASUREMENT DENSITY OF SURFACE SHAPE) — S201

OBTAIN IMAGE BASED ON INCOHERENT LIGHT ILLUMINATION — S202

DECIDE POSITION OF TARGET OBJECT FROM IMAGE BASED ON INCOHERENT LIGHT ILLUMINATION AND DECIDE TYPE AND ORIENTATION OF TARGET OBJECT BY COMPARING IMAGE BASED ON INCOHERENT LIGHT ILLUMINATION WITH CONTOUR OF PROJECTED IMAGE WHICH IS REGISTERED IN ADVANCE — S203

SPECIFY KNOWN SURFACE SHAPE AND MEASUREMENT TARGET REGION/MEASUREMENT DENSITY OF SURFACE SHAPE BASED ON INFORMATION OF TARGET OBJECT WHICH IS REGISTERED IN ADVANCE — S204

SET FRAME RATE BASED ON
ONLY POSITION OF TARGET OBJECT
OR
POSITION AND ORIENTATION OF TARGET OBJECT,
AND MEASUREMENT TARGET REGION
OR
ONLY MEASUREMENT DENSITY — S205

SET FREQUENCY CHANGE RATE OF COHERENT LIGHT SOURCE BASED ON KNOWN SURFACE SHAPE OF TARGET OBJECT AND SET FRAME RATE
OR
KNOWN SURFACE SHAPE OF TARGET OBJECT,
MEASUREMENT TARGET REGION, AND SET FRAME RATE
OR
ONLY SET FRAME RATE — S206

OBTAIN IMAGE BASED ON COHERENT LIGHT ILLUMINATION USING FREQUENCY CHANGE RATE SET IN STEP S206 AND FRAME RATE SET IN STEP S205 — S207

OBTAIN SURFACE SHAPE OF TARGET OBJECT — S208

OBTAIN DIMENSION OF X-Y TWO-DIMENSIONAL SHAPE FROM IMAGE BASED ON INCOHERENT LIGHT ILLUMINATION — S209

FIG. 8

FIG. 9

FIG. 10

# F I G. 11

DIMENSION MEASUREMENT PORTION OF
X-Y TWO-DIMENSIONAL SHAPE

L2

L2

5

L1

DIMENSION
MEASUREMENT PORTION OF
X-Y TWO-DIMENSIONAL SHAPE

L1

IMAGE OF X-Y TWO-DIMENSIONAL
SHAPE OF TARGET OBJECT

L2

L1

7

Europäisches
Patentamt

European
Patent Office

Office européen
des brevets

# EUROPEAN SEARCH REPORT

**Application Number**

EP 13 15 4752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/164951 A1 (DECK LESLIE L [US]) 4 September 2003 (2003-09-04) <br> * paragraph [0004] * <br> * paragraph [0008] - paragraph [0018] * <br> * paragraphs [0036], [0121] * <br> * paragraph [0067] - paragraph [0084]; figures 1,2 * | 1,2,4,10 | INV. <br> G01B9/02 <br> G01B11/24 |
| X | A. DAVILA ET AL: "Wavelength scanning interferometry using a Ti:Sapphire laser with wide tuning range", OPTICS AND LASERS IN ENGINEERING, vol. 50, no. 8, 3 March 2012 (2012-03-03), pages 1089-1096, XP055064055, ISSN: 0143-8166, DOI: 10.1016/j.optlaseng.2012.02.005 <br> * Sections 1 and 2 * | 1,2,4,10 | |

TECHNICAL FIELDS
SEARCHED        (IPC)

G01B

The present search report has been drawn up for all claims

| Place of search | Date of completion of the search | Examiner |
|---|---|---|
| Munich | 24 May 2013 | Petelski, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 15 4752

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2013

| Patent document cited in search report | Publication date | Patent family member(s) | | Publication date |
|---|---|---|---|---|
| US 2003164951 A1 | 04-09-2003 | AU | 2002364544 A1 | 09-07-2003 |
| | | US | 2003164951 A1 | 04-09-2003 |
| | | WO | 03054474 A1 | 03-07-2003 |

EPO FORM P0459

For more details about this annex : see Official Journal of the European Patent Office, No. 12/82

**EP 2 636 988 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *APPLIED OPTICS,* vol. 33 (34